# EUROPEAN PATENT SPECIFICATION

(11) **EP 1 087 493 B1**
(45) Date of publication and mention of the grant of the patent: **13.12.2006**
(21) Application number: 00308316.9
(22) Date of filing: 22.09.2000
(51) Int. Cl.: H02H 3/247

(54) **Voltage drop detector adjustable for different nominal voltages**
Spannungsdetektor, einstellbar für verschiedene Nennspannungen
Détecteur de tension ajustable pour différentes tensions nominales

(30) Priority: 24.09.1999 ES 9902119
(43) Date of publication of application: 28.03.2001
(73) Proprietor: Power Controls Iberica, SL, 08225 Terrassa, Barcelona (ES)
(72) Inventor: Luch, Ricardo Morron, 08225 Tarrasa, Barcelona (ES); Meyer-Haack, Wolfgang, 24534 Neumunster (DE); Telleria, Jose Fernando Mediavilla, 28034 Madrid (ES)
(74) Representative: Goode, Ian Roy

(56) References cited:
- FR-A- 2 616 960
- US-A- 4 331 996

## Description

The invention relates to a voltage drop detector for coupling to automatic circuit breakers, like the circuit breakers available in power supply installations for cutting off the supply when the supply voltage drops below a given level.

It is common practice in electric power supply installations to incorporate automatic circuit breakers, which are usually placed in relation to differential current detectors, in order to produce the tripping and consequent opening of the circuit of the power supply installation before any anomaly in the nominal supply voltage of the circuit.

The detectors used up to now to produce low voltage tripping are based on a functional circuit dependent on an activating relay, presenting problems of functional behavior and as far as manufacturing cost is concerned. See, for example, FR-A-2616960.

These problems can be summarized as follows:
- Overdependence on the electric properties of the activating relay, giving rise to a great variability of the tripping current, as well as delay in tripping time.
- Need for very tight tolerances in some key components, requiring the use of expensive elements.
- Behavior highly dependent on environmental conditions.
- Use of an overly expensive switch to obtain acceptable operation.

In order to solve such problems a voltage drop detector is proposed, according to the features of claim 1 the construction of which offers considerable advantages for the purpose for which it is intended.

This detector comprises a functional assembly formed by a circuit that comprises an input voltage rectifier stage, from which a cascade sequence of Zener diodes departs, connectable selectively in a common series or partially with the power circuit of a relay, parallel with which a capacitor is arranged, while in series with the relay a control potentiometer is included.

A functional assembly is thus obtained, in which the working voltage is selectable by means of connection of the Zener diodes, while with the potentiometer placed in series with the relay the tripping time delay is adjustable precisely within a good range of adjustment.

The element used as activator is a modified differential relay, making it possible to adjust the tripping current exactly, without depending in practice on the characteristics of the element and on environmental conditions.

A device presenting the following characteristics is thus obtained:
- Arrangement of different nominal voltages selectable by the user in a single device.
- Possibility of using the same device for direct current and alternating current supply lines.
- Behavior little variable in voltage and in tripping delay.
- Few requirements of the electronic functional assembly, making possible the use of cheap components.
- Use of a reliable activator for the determination of tripping.
- Low power consumption in normal consumption.
- Minimum level of electromagnetic interferences, since the magnetic field of the relay remains practically confined within the element itself.

Therefore, the detector certainly has some very advantageous characteristics, making it preferable to the conventional devices with the same function.

An embodiment of the invention will now be described, by way of example, with reference to the accompanying drawings, in which:

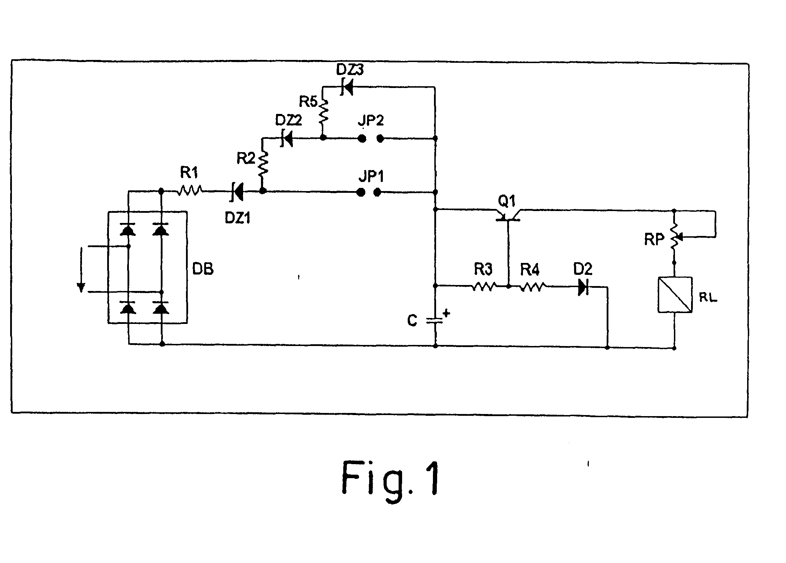

Figure 1 represents a wiring diagram of the voltage drop detector recommended.

The detector comes in the form of a functional assembly that comprises a rectifier stage (DB), through which the input is established on the electric circuit of the functional circuit.

After the stage (DB), a cascade sequence of Zener diodes (DZ1, DZ2, DZ3) is arranged in series with corresponding resistors (R1, R2, R3), determining respective shunts that can be connectable in a common series or partially, by means of circuit breakers (JP1 and JP2), with the electric power circuit of a relay (RL).

The current supply to the relay (RL) is established through a transistor (Q1), which is polarized by means of resistors (R3 and R4) and a diode (D2), a capacitor (C) going in parallel with that power circuit, while a potentiometer (RP) is placed in series with the relay (RL).

In that assembly, when nominal voltage is present in the input through stage (DB), if the circuit breaker (JP1) is closed, only Zener diode (DZ1) is connected, passing a current that charges the capacitor (C) and in turn feeds the relay (RL) through the transistor (Q1).

The power current of the relay (RL) is continuous and maintains the relay (RL) without being tripped, while the resistors (R3 and R4) and diode (D2) polarize the transistor (Q1) in order to place it in active status, draining a constant current to the relay (RL).

If the voltage is reduced in such conditions, when that reduction reaches a certain value, Zener diode (DZ1) returns to the state of disconnection; the current continues being circulated, however, through the relay (RL) by charge of the capacitor (C), which is being gradually discharged, so that, when the voltage of same drops below a certain value, the transistor (Q1) loses its polarization, the current through it being reduced, until it is finally disconnected, the current thereby suddenly dropping and the relay (RL) consequently being tripped.

The rate of reduction of voltage of the capacitor (C) depends on the position of the potentiometer (RP), by means of which the tripping time delay can be selected in a range, for example, of between 0 and 300 ms.

By opening circuit breaker (JP1) and closing circuit breaker (JP2) or opening both, other working voltages are obtained, so that the tripping voltage can be selectively fixed by manipulating the circuit breakers (JP1 and JP2).

The element used as activator is a modified differential relay (RL), which has its magnet completely demagnetized, so that only a given current level can retain the pin of the relay (RL), and when the current drops below that level, the relay (RL) is tripped, moving the tripping mechanism of the device, which gives rise to the cutoff of current in the installation.

## Claims

1. A voltage drop detector adjustable for different nominal current voltages, comprising a functional assembly that comprises an input voltage rectifier stage (DB), after which a sequence of Zener diodes is arranged, which are connectable with the power circuit of a relay (RL), to which the current is supplied through a polarized transistor (Q1), so that, when the voltage drops below a given value, the relay (RL) is tripped, activating the current cutoff mechanism in the installation;
**characterised in that** the sequence of Zener diodes is a cascade sequence of Zener diodes (DZ1, DZ2, DZ3) connectable selectively in common series or partially by means of circuit breakers (JP1, JP2).

2. The detector of claim 1 wherein the tripping voltage is selectable at different values, depending on the connection of the Zener diodes (DZ1, DZ2, DZ3) through manipulation of the circuit breakers (JP1, JP2).

3. The detector of claims 1 or 2 wherein the tripping of the relay (RL) takes place with some delay after the voltage drop below the established value, depending on the discharge of a capacitor (C) placed in parallel with the power circuit of that relay (RL), the delay being adjustable by means of a potentiometer (RP) arranged in series with the relay (RL).

4. The detector of any one of the preceding claims wherein a relay (RL) is used as activator, having its magnet completely demagnetized, so that only a given current level can retain the pin of the relay (RL), the tripping of same taking place when the current circulating through it drops below a certain level.

## Patentansprüche

1. Für unterschiedliche Nennspannungen einstellbarer Spannungsfalldetektor mit einer Funktionsbaugruppe, die eine Eingangsspannungsgleichrichterstufe (DB) aufweist, hinter der eine Folge von Zenerdioden angeordnet ist, die mit dem Leistungsstromkreis eines Relais (RL) verbindbar sind, dem der Strom über einen polarisierten Transistor (Q1) derart zugeführt wird, dass bei einem Spannungsabfall unterhalb eines gegebenen Wertes das Relais (RL) ausgelöst wird, wodurch der Stromunterbrechungsmechanismus in der Einrichtung aktiviert wird;
**dadurch gekennzeichnet, dass** die Folge von Zehnerdioden durch eine Kaskadenfolge von Zenerdioden (DZ1, DZ2, DZ3) gebildet ist, die wahlweise gemeinsam in Reihe oder teilweise mittels Schutzschalter (JP1, JP2) verbindbar sind.

2. Detektor nach Anspruch 1, wobei die Auslösespannung in Abhängigkeit von der Verbindung der Zenerdioden (DZ1, DZ2, DZ3) durch Betätigung der Schutzschalter (JP1, JP2) bei unterschiedlichen Werten gewählt werden kann.

3. Detektor nach Anspruch 1 oder 2, wobei die Auslösung des Relais (RL) mit einiger Verzögerung nach dem Spannungsfall unterhalb des festgesetzten Wertes stattfindet, abhängig von der Entladung eines Kondensators (C), der parallel zu dem Leistungsstromkreis des Relais (RL) angeordnet ist, wobei die Verzögerung mittels eines Potentiometers (RP) einstellbar ist, der mit dem Relais (RL) in Reihe angeordnet ist.

4. Detektor nach einem beliebigen der vorhergehenden Ansprüche, wobei als Aktivierungseinrichtung ein Relais (RL) verwendet wird, dessen Magnet vollständig entmagnetisiert ist, so dass nur ein gegebener Strompegel den Kontakt des Relais (RL) halten kann, dessen Auslösung stattfindet, wenn der durch diesen fließende Strom auf einen Pegel unterhalb eines bestimmten Pegels fällt.

## Revendications

1. Détecteur de chute de tension réglable pour différentes tensions nominales d'un courant, comprenant un ensemble fonctionnel qui comporte un étage de redressement (DB) de tension d'entrée, après lequel est disposée une suite de diodes Zener, qui sont connectables au circuit d'alimentation électrique d'un relais (RL), auquel le courant est fourni par l'intermédiaire d'un transistor polarisé (Q1) de façon que, lorsque la tension chute au-dessous d'une valeur donnée, le relais (RL) soit déclenché, en activant le mécanisme de coupure de courant de l'installation ;
**caractérisé en ce que** la suite de diodes Zener est un montage en cascade d'une suite de diodes Zener (DZ1, DZ2, DZ3) connectables de manière sélective en série commune ou partiellement à l'aide de disjoncteurs (JP1, JP2).

2. Détecteur selon la revendication 1, dans lequel la tension de déclenchement peut être choisie à différentes valeurs, selon la connexion des diodes Zener (Z1, DZ2, DZ3), par manipulation des disjoncteurs (JP1, JP2).

3. Détecteur selon la revendication 1 ou 2, dans lequel le déclenchement du relais (RL) a lieu avec un certain retard après la chute de tension sous la valeur établie, en fonction de la décharge d'un condensateur (C) monté en parallèle avec le circuit d'alimentation électrique de ce relais (RL), le retard étant réglable à l'aide d'un potentiomètre (RP) monté en série avec le relais (RL).

4. Détecteur selon l'une quelconque des revendications précédentes, dans lequel un relais (RL) sert d'activateur, son aimant étant entièrement démagnétisé, de façon que seulement un niveau de courant donné puisse retenir la broche du relais (RL), le déclenchement de celui-ci survenant lorsque le courant circulant dans celui-ci chute sous un certain niveau.
